**Europäisches Patentamt**

**European Patent Office**

**Office européen des brevets**

(19)

(11) Publication number : **0 335 505 B1**

# EUROPEAN PATENT SPECIFICATION

(12)

(45) Date of publication of patent specification :
**29.07.92 Bulletin 92/31**

(51) Int. Cl.⁵ : **G01F 11/26, B65D 47/20, G01F 11/10, G01F 11/28**

(21) Application number : **89302016.4**

(22) Date of filing : **01.03.89**

(54) **Fluid dispensing device with continuously variable dosage selection.**

(30) Priority : **30.03.88 US 162784**

(43) Date of publication of application :
**04.10.89 Bulletin 89/40**

(45) Publication of the grant of the patent :
**29.07.92 Bulletin 92/31**

(84) Designated Contracting States :
**AT BE CH DE ES FR GB IT LI NL SE**

(56) References cited :
**GB-A- 2 183 217**
**US-A- 4 143 794**

(73) Proprietor : **MERCK & CO. INC.**
**126, East Lincoln Avenue P.O. Box 2000**
**Rahway New Jersey 07065-0900 (US)**

(72) Inventor : **Macartney, Carl**
**38 Redfield Road**
**Lincroft New Jersey 07738 (US)**
Inventor : **Saffron, Ronald G.**
**Linley Farm East Knoyle**
**Nr. Salisbury Wiltshire (GB)**

(74) Representative : **Hesketh, Alan, Dr.**
**European Patent Department Merck & Co.,**
**Inc. Terlings Park Eastwick Road**
**Harlow Essex, CM20 2QR (GB)**

EP 0 335 505 B1

## Description

U.S. Patent 4,143,794 to Stratford et al. provides for a squeeze bottle with a dosage cup within which resides an extension of the dip tube of a squeeze bottle and a dose determining means whereby a series of holes are provided for in the extension and the dose determining means, and the rotation of the dose determining means causes the holes to be selectively aligned so that discrete doses can be provided. The instant invention is an improvement over the prior art in providing for a continuously variable selection of dose volumes.

## SUMMARY OF THE INVENTION

This invention is concerned with an improvement in the dispensing of fluid materials from a squeeze bottle whereby the dose which is selected is variable over a continuous range of dosages. Thus, it is an object of the instant invention to describe the squeeze bottle for dispensing fluids through the continuously variable dosage cup. It is a further object to describe the functioning of the dosage cup with the dip tube inserted into the squeeze bottle and reservoir of fluid and the engagement of the extension of the dip tube and the downwardly projecting column to provide for the continuous selection of dose volumes within the dosage cup. A still further object of this invention is to describe the grooves in the extension and the column which intersect to provide for the orifice of variable height within the dosage cup to provide for the selection of the level of fluid within the dosage cup. Further objects will become apparent from a reading of the following description.

## DESCRIPTION OF THE INVENTION

This invention provides for an improved device for dispensing variable volumes of fluids, generally as liquids, although occasionally as flowable powders from a container. These devices are particularly suited for the dispensing of liquid or powdered medicaments to be topically applied to animals or concentrated medicaments for further dilution and administration to a number of animals but could equally well be used for the dispensing of oral liquid medicaments for animals or humans. Further uses could include the dispensing of liquid fertilizers, insecticides fungicides or weed killers for agricultural uses or detergents, waxes, or oils for household uses.

The preferred use of the device of this invention is for the topical application of animal insecticides. Generally such topically applied products are applied to the back, along the midline, of the animal being treated. Cattle and sheep are most commonly treated, however, horses, goats, swine, and companion pets, such as dogs and cats can also be treated. The active ingredient in such cases is intended to have systemic effects by the absorbance of the drug through the skin of the animal. To ensure that the product is utilized most efficiently by providing the optimum dose without either underdosing, which can result in a lack of efficacy, or overdosing, which can cause at the least a waste of product, but may lead to toxic effects caused by overdosing, the instant device finds utility in being able to exactly dispense the volume of active ingredient required for the particular weight of the animal. Previous devices with only a discrete number of dosages to select from would overdose some and underdose other animals with the proper dose given to very few animals.

Accordingly, this invention provides for an improved dosing device for fluids which provides for a reservoir of fluid material in a compressable or "squeeze" bottle with a dip tube extending from the bottom of the bottle to the fluid dispensing device to which it is affixed. An extension in fluid connection with the dip tube leads to and is within a dosage cup, the extension being constructed with a groove enabling fluid to pass from within the extension into the dosage cup. The groove is oriented generally lengthwise along the extension with an upper end and a lower end such that the upper end is higher within the dosage cup than the lower end. A downwardly projecting sleeve is provided which is in slidable engagement with the extension, and which also has a groove which will enable fluid to pass therethrough. The groove in the sleeve is also generally oriented lengthwise along the sleeve with an upper end and a lower end such that the upper end is higher within the dosage cup than the lower end. The extension and downwardly projecting sleeve are generally cylindrical in shape however, the sleeve and extension could also be manufactured in the shape of matching truncated cones. The upper end of the extension and the lower end of the sleeve can be slightly smaller then the opposite ends to facilitate manufacture and provide good surface contact.

The groove in the sleeve and the extension are oriented such that when the sleeve and extension are in slidable engagement with each other the grooves are placed in an angular and intersecting arrangement to expose an orifice where they intersect. The sleeve is rotatable between positions to continuously vary the selection of the point of the intersecting grooves to cause the orifice to vary its height within the dosage cup.

The continuously variable height of the orifice allows for a continuously variable volume of liquid to be selected by rotating the sleeve between positions which expose the aperture at a minimum height or a maximum height and continuously therebetween within the dosage cup. The fluid is placed in the dosage cup by applying pressure to the fluid in the reservoir, as by squeezing a flexible container which will cause the fluid to flow up the dip tube and into the extension. The fluid will rise in the extension until it reaches the orifice which had been previously selected for its height within the dosage cup by rotating the sleeve until the intersecting grooves meet at the proper height. The fluid will flow through the orifice and into the dosage cup until the fluid reaches the level of the orifice. This will be the desired dose. When pressure is released on the squeeze bottle air will flow through the orifice to replace the volume of fluid removed from the bottle. If excess fluid, higher within the dosage cup than the selected level of the orifice, is placed into the dosage cup, when the pressure on the squeeze bottle is released, fluid above the height of the orifice will be drawn back through the orifice until the level of the fluid is at the height of the orifice. Then air will be drawn into the bottle to replace the fluid removed. In such a manner, when a particular dosage is selected, the volume in the dosage cup will always be exactly determined in a continuous manner between the maximum and minimum dosages provided.

The dosages are determined within the dosage cup by the intersection of the groove on the extension with the groove on the sleeve. The intersection is caused by arranging one of the grooves in an angular relationship with the axis of the extension or the sleeve. Generally the groove will form a helix about the axis of the extension or sleeve. The corresponding groove could be a straight groove generally parallel with the axis of the extension or sleeve, however both grooves could be angular or helical in configuration. To effect an intersection of such grooves, the two-helix arrangement would have one of the helices in the form of a right-handed thread and the other helix in a left-handed thread. In this manner, an effective intersection occurs with a sharply defined orifice through which the fluid is dispensed. In general, any arrangement of grooves is possible so long as the grooves are caused to intersect by the rotational movement of the column about the extension.

The extension may be constructed to fit inside or outside of the sleeve with the sleeve extending substantially to the bottom of the inside of the dosage cup. It is preferred to have the sleeve contact the bottom of the cup, either inside or outside of the extension since such an arrangement provides for a better fluid seal between the inside of the extension and downwardly projecting sleeve and the inside of the cup. The fluid seal of the bottom of the downwardly projecting sleeve is improved by ensuring that firm contact is made between the bottom surface of the downwardly projecting sleeve and the top surface of the bottom of the cup, or the top surface of a flange situated in the bottom of the cup. One way to ensure such contact is to manufacture the downwardly projecting sleeve so that it is slightly longer then the depth of the cup. In this manner when the cap is installed on the doseage cup, the slightly longer length of the downwardly projecting sleeve, coupled with the inherent flexibility of the plastic materials of which the dosage dispensing device is constructed, will ensure that pressure is exerted on the contact surface of the downwardly projecting sleeve and the bottom surface or flange in the cup, thus providing for an efficient seal. The longer length of the downwardly projecting sleeve is preferably to the extend of from 0.1 to 1.0 mm.

By providing for an efficient seal at the contact surface of the bottom of the downwardly projecting sleeve and the top surface of the inside bottom surface or flange of the cup, the tolerences of the sidewall contact surfaces of the extension and the downwardly projecting sleeve can be lessened. Such an arrangement is preferred since the larger surface areas of the sidewall contact surfaces would provide for greater frictional resistance to the rotation of the cap and downwardly projecting sleeve about the extension. Greater facility of rotation of the cap is provided for with an efficient seal arrangement of the bottom of the downwardly projecting sleeve with the top surface or flange at the inside bottom of the cup.

The grooves will extend from the lowest dose possible near the bottom of the cup, to the highest dose possible nearest the top of the cup. The grooves will preferably both be coextensive with the range of dosages from the lowest to the highest since extending one groove higher or lower than the other will not enable an intersection to occur beyond the less extensive groove; thus no orifice will be formed.

The dosage cup will also be fitted with a cap which contains a dispensing spout with which to pour the selected dose from the cup and it is further beneficial if the cup is fitted with a vent to permit air to enter the cup at the same time that the fluid material is being poured out of the dispensing spout.

The cap of the dispensing cup is preferably integral with the downwardly projecting sleeve in order to facilitate the rotation of the sleeve about the extension. Other arrangements could involve the upper end of the downwardly projecting sleeve to project through the cap and allow the rotation of the column independently of the cap. The integral arrangement of sleeve and cap is preferred because of simplicity of construction and the leverage and finer level of control which is gained with such an arrangement. Further, the cap can, in conjunction with the outside of the dosage cup, be fitted with a pointer and scale to assist in the accurate determination of the dosage to be selected. In addition, the juncture of the cap and dosage cup could be equipped with means to restrict the rotation of the cap so that the range of intersecting grooves would not be exceeded or exceeded only to the point of providing a position of non-intersecting grooves which can operate as a stop or shut-off position. Such a stop position could conveniently be indicated by a graphic display of the indicator or by a detent, or by both. Further, major divisions of the scale could be provided with detents to provide for a rapid determination of the dosages used most often.

In a further embodiment of the instant invention the extension can be constructed in a truncated fashion such that the top surface of the extension rises from a low point to a high point within the dosage cup and fits either inside or outside of the sleeve. Generally the top surface of the extension will rise helically within the extension. In such a situation the orifice normally found where the two grooves intersect is thus an elongated orifice consisting of the continuously varying length of the upper portion of the groove extending from the top surface of the extension where it intersects with the groove of the sleeve, to the upper end of the groove on the sleeve. In operation, such an arrangement would function in the same manner as when two intersecting grooves are employed.

The invention may be performed in various ways and preferred embodiments of the invention will now be described, by way of example, with reference to the accompanying drawings.

In the accompanying drawings:

Figure 1 is an exploded view of the fluid dispensing device showing the fluid container, the dispensing cup and the dose determining means.

Figure 2 is a cross-section of the fluid dispensing device, assembled and installed on the fluid container.

Figure 3 is a partial cross-section of the dose determining means of the fluid dispensing device.

Figure 4 is a cross-section of Figure 3 taken along the lines and in the direction of line 4-4.

Figure 5 is a cross-section of another embodiment of the fluid dispensing device.

Figure 6 is an exploded view in partial cross-section of the device of Figure 5.

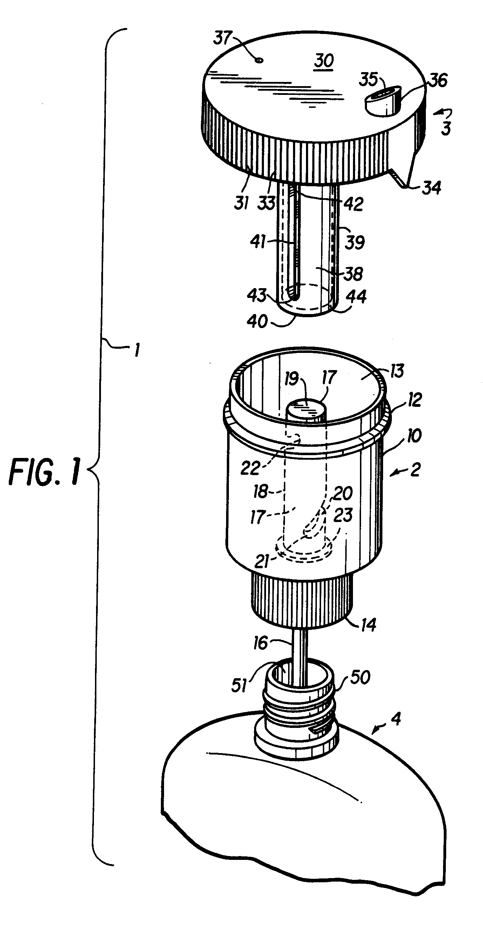

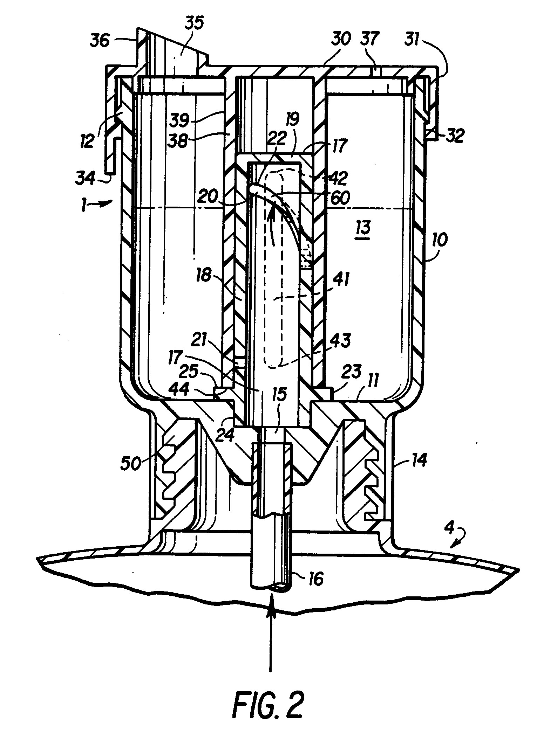

Referring specifically to Figures 1 and 2, the complete fluid dispensing device 1, is shown in greater detail, comprising a dosage cup assembly 2, fitted with a cap assembly 3. The dosage cup assembly 2, is in threaded engagement with the fluid container 4.

The dosage cup assembly 2 comprises a sidewall 10 with a bottom wall 11 enclosing a space 13. The sidewall 10 is affixed with attachment means 12 for engaging the cap assembly 3. Preferably the attachment means 12 are formed on the outside of side wall 10. The bottom wall 11 is integrally formed on the outside thereof with threaded attachment means 14 for engagement with corresponding threaded attachment means 50 on the fluid container 4.

The bottom wall 11 is also fitted with an opening 15 which is connected on the outside of the bottom wall 11 to a dip tube 16. The dip tube 16 extends through the neck 51 of the fluid container 4. The dip tube extends substantially to the bottom of the fluid container when the dispensing cup assembly 2 is affixed to the fluid container 4, upon the engagement of threaded attachment means 14 and 50 of the dispensing cup assembly 2 and the fluid container 4.

The opening 15 in the bottom wall 11 of the dispensing cup assembly 2 is fitted on the inside thereof with an extension 17. The extension 17 consists of a substantially cylindrical outer wall 18 and a top wall 19. The outer wall 18 has a groove 20 therethrough which generally extends from a lower end 21 to an upper end 22 in a curved manner such that the groove 20 is substantially helical in nature. The groove 20 will extend for less than one full revolution about the outer wall 18 of the extension 17.

The extension 17 is also fitted at its lower end with a flange 23 which places the extension 17 and thus the groove 20 at the appropriate height within the dosage cup assembly so that accurate, reproducable and predictable dosages can be determined. The lower end of the extension 17 is also fitted with anchoring means 24 within the bottom wall 11 to prevent any leakage of fluid either into or out of the dispensing cup assembly 1 which would adversely effect the accuracy of the volume of fluid dispensed. Alternatively, the anchoring means 24 as well as the extension 17 itself could be made integrally with the dispensing cup assembly 1 as a one-piece construction.

The cap assembly 3 consists of a top portion 30 with a circumferential side wall 31 attached to the top portion 30 at the outer edge thereof. The inside of the downwardly projecting side wall 31 has locking means 32 for engagement with the corresponding locking means 12 on the outer wall 10 of the dispensing cup assembly 2. Since the cap assembly 3 is designed to rotate about a vertical axis about the dispensing cup assembly, continuous circumferential locking means on either the side wall 10 or the downwardly projecting side wall 31 is preferred. In order to reduce the hoop strength of the locking means 12 and 32 during assembly it may be advantageous to manufacture one of the locking means in a non-continuous or interrupted fashion. This would facilitate the mating of the two locking means 12 and 32. The downwardly projecting side wall 31 may also be fitted with gripping means to facilitate the rotation of the cup assembly 3, such as a series of vertical cuts 33.

The downwardly projecting side wall 31 also contains a dosage indicator 34 which will indicate the dosage selected by its alignment with a series of volume indicators (not shown) on the outside of the sidewall 10. In addition to volume, the dosage could be indicated in the size or weight of animals which are to be treated with a particular volume of fluid. Where the contents of the container are in a concentrated form, the indicators could define the number of animals treated with a particular volume of fluid.

The top portion 30 is also fitted with an orifice 35 and a dispensing spout 36. To assist in the dispensing of the fluid, the top portion 30 also contains a vent hole 37 which is generally located diametrically opposite the orifice 35 and dispensing spout 36.

The cap assembly 3 is either fitted with or is integral with a downwardly projecting sleeve 38 which consists of a substantially cylindrical side wall 39 which is open or has an opening 40 at the bottom edge thereof. The inside diameter of the downwardly projecting sleeve 38 is substantially the same as the outside diameter of the extension 17, and extends at least to below the lower edge 21 of the groove 20 in the extension 17.

The downwardly projecting column is also fitted with a groove 41 therethrough which is generally vertically arranged in the cylindrical side wall and which has an upper end 42 and a lower end 43. When the cap assembly 3 is affixed to the dispensing cup assembly 2, the downwardly projecting sleeve 38 is fitted snugly about the extension 17 and the upper ends 22 and 42 and the lower ends 21 and 43 of the two grooves 20 and 41 are at substantially the same height from the bottom wall 11 of the dispensing cup assembly 2. In addition, the helical groove 20 of the extension 17 and the vertical groove 41 of the downwardly projecting sleeve 38 intersect at a single point and form an orifice 60 which will vary in height within the dosing cup assembly as the cap assembly 3 is rotated. The rotation of the cap assembly causes the mutual angular displacement of the extension relative to the downwardly projecting sleeve. The bottom surface 44 of the downwardly projecting column 38 contacts the top surface 25 of the flange 23 to form a seal between the inside of the extension and downwardly projecting column and the inside of the cup.

The assembly of the dip tube 16 and the extension 17 to the opening 15 allows fluid communication between the fluid container 4 and the inside of the extension 17. Likewise the close fit of the inside of the downwardly projecting sleeve 38 with the outside of the extension and the engagement of the two grooves 20 and 41 to produce a single orifice 60 through both of the sidewalls 18 and 39 of the extension 17 and downwardly projecting sleeve 38 respectively allows for fluid communication between the inside of the extension 17 and the inside of the dispensing cup assembly 2. The arrows show the direction of fluid flow during the procedure of filling the dispensing cup assembly. With the fluid container 4 generally of the deformable or "squeeze bottle" type, pressure applied to the sides of the fluid container causes fluid to rise in the dip tube 16, pass through the opening 15 and enter the inside of the extension 17. The fluid will continue to rise in the extension 17 until it reaches the level of the orifice 60 whereupon the fluid enters the dispensing cup assembly. The fluid will rise in the dispensing cup assembly 2 until it reaches the level of the orifice 60 or even beyond if continued pressure is applied to the fluid container 4. When the pressure on the fluid container is released the upward fluid flow will cease and, due to the resiliency of the fluid container 4, a partial vacuum will be created which will draw fluid from the extension. If fluid in the dispensing cup assembly 2 is at a level higher than the orifice 60, the partial vacuum will draw fluid through the orifice 60, into the extension 17, and the dip tube 16, returning such fluid to the fluid container 4. When the fluid level in the dispensing cup assembly is lowered to the level of the orifice 60, no further fluid can be returned to the fluid container 4 through the extension 17 and air will enter the orifice 60 and extension 17, into the fluid container 4 to replace the volume of fluid dispensed into the fluid dispensing cup 2. The fluid in the dispensing cup assembly 2 is removed therefrom by tipping the complete fluid dispensing device 1 to allow the fluid to pass through the opening 35 and dispensing spout 36. To ensure the accuracy of the dose, the cap may be rotated to the shut-off position prior to emptying the cup.

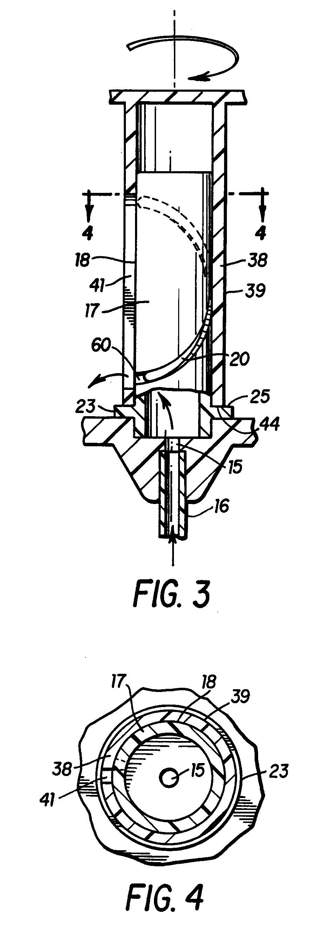

In Figure 3 and 4 a partial view of the dispensing device is shown consisting of the mated extension 17 and downwardly projecting sleeve 38 showing the close fit of the inside surface of the cylindrical side wall 39 of the downwardly projecting sleeve 38, and the outside surface of the outer wall 18 of the extension 17 as well as the close fit of surface 25 of the flange 23 with surface 44 of the downwardly projecting sleeve 38. The arrows show the direction of the fluid during the procedure of filling the dispensing cup assembly, and the rotation of the cup assembly 3 with its downwardly projecting sleeve 38 about the cup dispensing assembly 2 and its extension 17.

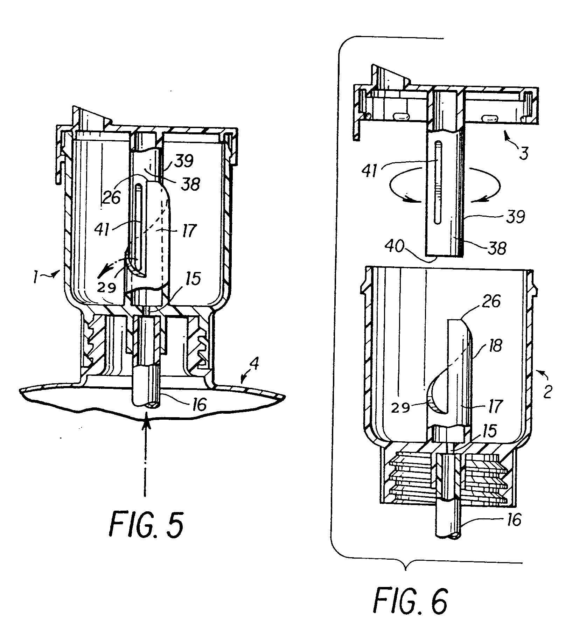

In figures 5 and 6 an alternate embodiment of the fluid dispensing device 1 is shown where the modification occurs in the extension 17 and the downwardly projecting sleeve 38. The extension 17 consists of a sidewall 18 which has a top surface 29 in a generally curved shape of increasing height within the dispensing cup assembly 2. The top surface 29 of the extension 17 generally forms a helical curve along the sidewall 18 of the extension 17 and completes up to one revolution about the side wall 18. If the top surface 29 of the extension 17 completes less than one revolution of a helix about the sidewall 18, a non-curved portion 26 of the top surface 29 may result.

The cup assembly 3 contains a downwardly projecting sleeve 38 with a groove 41, an opening 40 at the bottom thereof, and the outside diameter of the downwardly projecting column 38 is substantially the same as the inside diameter of the sidewall 18 of the extension 17.

When the cup assembly 3 is installed on the dispensing cup assembly 2, generally the downwardly projecting sleeve 38 fits within the extension 17 and the groove 41 intersects the top surface 29 of the extension at a point determined by the degree of rotation of the cap assembly 3 about the dispensing cap assembly 2. When the fluid container is squeezed and fluid rises in the dip tube 16, it passes through the opening 15, into the extension 17, and out of through the groove 41 to the extent such groove extends higher than the top surface 29. When the fluid returns to the fluid container 4, the fluid below the intersection of the top surface 29 with the groove 41 is retained in the dispensing cup assembly 2 for subsequent dispensing.

The fluid dispensing device may be made of plastic materials suitable for injection molding such as polyethylene or polyropylene which should be inert to the fluid materials which are intended to be dispensed. The use of such injection molding resins will provide for the inexpensive and facile manufacture of the dosing device, yet will still provide for the dimensional accuracy which is required for the administration of medicinal fluids. Further, since the containers upon which the instant caps are installed may be refilled with fluid from a large stock container, the use of such materials will provide for the durability necessary for such prolonged operation.

## Claims

1. A dose measuring device (1) for fluids which comprises a dosage cup (2) fitted with a cap assembly (3), the bottom wall (11) of the dosage cup (2) being fitted with an opening (15) which is connected on the outside of the bottom wall (11) to a dip tube (16), the dip tube (16) having an extension (17) situated within the dosage cup (2), the extension (17) being constructed to enable fluid to pass from the dip tube (16) into the dosage cup (2) through the extension (17), and the cap assembly (3) being either fitted with or integral with a downwardly projecting sleeve (38) in slidable engagement with the extension (17), said downwardly projecting sleeve (38) being provided with a groove (41) allowing fluid to pass therethrough, said groove (41) having a lower end (43) and an upper end (42) wherein the groove (41) is oriented along the downwardly projecting sleeve (38) to connect the lower end (43) with the upper end (42); characterised in that the extension (17) is provided with a groove (20) allowing fluid to pass therethrough, said groove (20) having a lower end (21) and an upper end (22) wherein the groove (20) is oriented along the extension (17) to connect the lower end (21) with the upper end (22), whereby the groove (20) in the extension (17) and the groove (41) in the downwardly projecting sleeve (38) are placed in an angular and intersecting arrangement with each other when the downwardly projecting sleeve (38) and the extension (17) are slidably engaged and the downwardly projecting sleeve (38) is rotatable between positions for an infinitely variable selection of intersection points of the two grooves (20) and (41) to expose a single orifice (60) of continuously varying height within the dosage cup (2) allowing fluid to pass from the dip tube (16) into the dosage cup (2) and return of any excess fluid through the orifice (60) and into said dip tube (16).

2. The dose measuring device of Claim 1 wherein one of the grooves (20) or (41) on the extension (17) or the downwardly projecting sleeve (38) is helical in shape and the groove (41) or (20) on the other of the downwardly projecting sleeve (38) or extension (17) is generally longitudinal in nature.

3. The dose measuring device of Claim 1 wherein both of the grooves (20) and (41) on the extension (17) and downwardly projecting sleeve (38) are helical in shape provided that each helical groove (20) and (41) is the opposite direction from the other.

4. The dose measuring device of Claim 1 wherein the upper ends (22) and (42) of both grooves (20) and (41) are situated at substantially the same height within the dosage cup (2) and that the lower ends (21) and (43) of both grooves (20) and (41) are also situated at substantially the same height within the dosage cup (2).

5. The dose measuring device of Claim 4 wherein the lower ends (21) and (43) of the grooves (20) and (41) are situated near the bottom of the dosage cup (2) and the upper ends (22) and (42) of the grooves (20) and (41) are situated near the top of the dosage cup (2).

6. The dose measuring device of Claim 1 which is attached to a fluid container (4) with flexible sidewalls to enable fluid to rise in the dip tube (16) caused by the increase in pressure on the fluid in the container (4) caused by the compression of the flexible sidewall.

7. The dose dispensing device of Claim 1 wherein the downwardly projecting sleeve (38) is integral with the cap (3) of the dosage cup (2).

8. The dose dispensing device of Claim 7 wherein the cap (3) also contains a spout (36) for the removal of the contents of the dosage cup (2).

9. The dose dispensing device of Claim 8 wherein the cap (3) also contains a vent (37) to assist in the removal of the contents of the dosage cup (2).

10. The dose dispensing device of Claim 7 wherein the cap (3) contains a dosage indicator (34) and the dosage cup (2) contains a scale for preselecting the dose to be dispensed.

11. The dose dispensing device of Claim 1 wherein the outside diameter of the extension (17) is substantially the same as the inside diameter of the downwardly projecting sleeve (38).

12. The dose dispensing device of Claim 1 wherein the inside diameter of the extension (17) is substantially the same as the outside diameter of the downwardly projecting sleeve (38).

13. The dose dispensing device of Claim 1 where one of the grooves (20) or (41) extends along the extension (17) or downwardly projecting sleeve (38) beyond the extent of the other groove (41) or (20) to provide a position where no orifice (60) is formed.

14. A dose measuring device (1) for fluids which comprises a dosage cup (2) fitted with a cap assembly (3), the bottom wall (11) of the dosage cup (2) being fitted with an opening (15) which is connected on the outside of the bottom wall (11) to a dip tube (16), the dip tube (16) having an extension (17) situated within the dosage cup (2), the extension (17) being constructed to enable fluid to pass from the dip tube (16) into the dosage cup (2) through the extension (17), and the cap assembly (3) being either fitted with or integral with a downwardly projecting sleeve (38) in slidable engagement with the extension (17), said downwardly projecting sleeve (38) being provided with a groove (41) allowing fluid to pass therethrough, said groove (41) having a lower end (43) and an upper end (42) wherein the groove (41) is oriented along the downwardly projecting sleeve (38) to connect the lower end (43) with the upper end (42); characterised in that the extension (17) consists of a sidewall (18) provided with a top surface (29) allowing fluid to pass over said top surface (29) where said top surface (29) rises from a low point to a high point within the dosage cup (2), whereby the top surface (29) of the extension (17) and the groove (41) in the downwardly projecting sleeve (38) are placed in an angular and intersecting arrangement with each other when the downwardly projecting sleeve (38) and the extension (17) are slidably engaged and the downwardly projecting sleeve (38) is rotatable between positions for an infinitely variable selection of intersection points of the top surface (29) of the extension (17) and the groove (41) of the downwardly projecting sleeve (38) to expose a continuously varying length of the upper portion of the groove (41) within the dosage cup (2) allowing fluid to pass from the dip tube (16) into the dosage cup (2) and return of any excess-fluid through the exposed upper portion of the groove (41) and into said dip tube (16).

15. The dose measuring device of Claim 14 wherein the top surface (29) of the extension (17) is helical in shape.

16. The dose measuring device of Claim 14 wherein the lowest point of the top surface (29) of the extension (17) is situated near the bottom of the dosage cup (2) and the highest point of the top surface (29) of the extension (17) is situated near the top of the dosage cup (2).

17. The dose measuring device of Claim 14 wherein the outside diameter of the extension (17) is substantially the same as the inside diameter of the downwardly projecting sleeve (38).

18. The dose measuring device of Claim 14 wherein the inside diameter of the extension (17) is substantially the same as the outside diameter of the downwardly projecting sleeve (38).

## Patentansprüche

1. Dosismeßvorrichtung (1) für Fluide, welche einen Dosierbecher (2) aufweist, welcher passend mit einer Kappenanordnung (3) versehen ist, wobei die Bodenwand (11) des Dosierbechers (2) passend mit einer Öffnung (15) versehen ist, welcher auf der Außenseite der Bodenwand (11) mit einem Tauchrohr (16) verbunden ist, wobei das Tauchrohr (16) eine Verlängerung (17) hat, die in dem Dosierbecher (2) angeordnet ist, die Verlängerung (17) derart ausgelegt ist, daß Fluid von dem Tauchrohr (16) in den Dosierbecher (2) über die Verlängerung (17) gelangen kann, und wobei die Kappenanordnung (3) entweder mit einer nach unten weisenden Hülse (38) in Gleiteingriff mit der Verlängerung (17) versehen oder einteilig mit dieser ausgelegt ist, die nach unten weisende Hülse (38) mit einer Ausnehmung (41) versehen ist, welche einen Fluiddurchgang gestattet, die Ausnehmung (41) ein unteres Ende (43) und ein oberes Ende (42) hat, und wobei die Ausnehmung (41) längs der nach unten weisenden Hülse (38) verläuft, um das untere Ende (43) mit dem oberen Ende (42) zu verbinden, dadurch gekennzeichnet, daß die Verlängerung (17) mit einer Ausnehmung (20) versehen ist, welche einen Fluiddurchgang gestattet, die Ausnehmung (20) ein unteres Ende (21) und ein oberes Ende (22) hat, die Ausnehmung (20) längs der Verlängerung (17) verläuft, um das untere Ende (21) mit dem oberen Ende (22) zu verbinden, wodurch die Ausnehmung (20) in der Verlängerung (17) und die Ausnehmung (41) in der nach unten weisenden Hülse (38) in eine Winkel- und Schnittlage miteinander bringbar sind, wenn die nach unten weisende Hülse (38) und die Verlängerung (17) in Gleiteingriff sind und die nach unten weisende Hülse (38) zwischen Positionen für eine stufenlos veränderliche Wahl der Schnittpunkte der beiden Ausnehmungen (20) und (41) verdrehbar ist, um eine einzige Öffnung (60) in einer sich stufenlos verändernden Höhe innerhalb des Dosierbechers (2) freizulegen, so daß Fluid von dem Tauchrohr (16) in den Dosierbecher (2) gelangen und jegliches überschüssige Fluid über die Öffnung (60) in das Tauchrohr (16) zurückkehren kann.

2. Dosismeßvorrichtung nach Anspruch 1, bei der eine der Ausnehmungen (20) oder (41) auf der Verlängerung (17) oder der nach unten weisenden Hülse (38) schraubenlinienförmig ausgebildet ist, und die Ausnehmung (41) oder (20) auf dem anderen Teil umfassen die nach unten weisende Hülse (38) oder die Verlängerung (17) im allgemeinen in Längsrichtung verläuft.

3. Dosismeßvorrichtung nach Anspruch 1, bei der beide Ausnehmungen (20) und (41) auf der Verlängerung (17) und der nach unten weisenden Hülse (38) schraubenlinienförmig gestaltet sind, vorausgesetzt, daß jede schraubenlinienförmige Ausnehmung (20) und (41) einen gegensinnigen Verlauf zur jeweils anderen hat.

4. Dosismeßvorrichtung nach Anspruch 1, bei der die oberen Enden (22) und (42) der beiden Ausnehmungen (20) und (41) im wesentlichen auf derselben Höhe in dem Dosierbecher (2) liegen, und bei der die unteren Enden (21) und (43) beider Ausnehmungen (20) und (41) ebenfalls im wesentlichen auf derselben Höhe in dem Dosierbecher (2) liegen.

5. Dosismeßvorrichtung nach Anspruch 4, bei der die unteren Enden (21) und (43) der Ausnehmungen (20) und (41) in der Nähe des Bodens des Dosierbechers (20) liegen, und die oberen Enden (22) und (42) der Ausnehmungen (20) und (41) in der Nähe der Oberseite des Dosierbechers (2) liegen.

6. Dosismeßvorrichtung nach Anspruch 1, welche an einem Fluidbehälter (4) mit flexiblen Seitenwänden angebracht ist, um zu ermöglichen, daß das Fluid in dem Tauchrohr (16) dadurch aufsteigt, daß der Druck auf das Fluid im Behälter (4) dadurch vergrößert wird, daß die flexible Seitenwand komprimiert wird.

7. Dosisausgabevorrichtung nach Anspruch 1, bei der die nach unten weisende Hülse (38) einteilig mit der Kappe (3) des Dosierbechers (2) ausgebildet ist.

8. Dosisausgabevorrichtung nach Anspruch 7, bei der die Kappe (3) auch eine Schnauze (36) zum Ausleiten des Inhalts des Dosierbechers (2) umfaßt.

9. Dosisausgabevorrichtung nach Anspruch 8, bei der die Kappe (3) auch eine Entlüftungseinrichtung (37) zur Unterstützung des Ableitens des Inhalts des Dosierbechers (2) umfaßt.

10. Dosisausgabevorrichtung nach Anspruch 7, bei der die Kappe (3) eine Dosisanzeigeeinrichtung (34) umfaßt, und bei der der Dosierbecher (2) eine Skala zur Vorwahl der auszugebenden Dosis umfaßt.

11. Dosisausgabevorrichtung nach Anspruch 1, bei der der Außendurchmesser der Verlängerung (17) im wesentlichen gleichgroß wie der Innendurchmesser der nach unten weisenden Hülse (38) ist.

12. Dosisausgabevorrichtung nach Anspruch 1, bei der der Innendurchmesser der Verlängerung (17) im wesentlichen gleichgroß wie der Außendurchmesser der nach unten weisenden Hülse (38) ist.

13. Dosisausgabevorrichtung nach Anspruch 1, bei der eine der Ausnehmungen (20) oder (41) längs der Verlängerung (17) oder der nach unten weisenden Hülse (38) über die Erstreckung der anderen Ausnehmung (41) oder (20) hinaus verläuft, um eine Position bereitzustellen, bei der man keine Öffnung (60) erhält.

14. Dosismeßvorrichtung (1) für Fluide, welche einen Dosierbecher (2) aufweist, welcher passend mit einer Kappenanordnung (3) versehen ist, wobei die Bodenwand (11) des Dosierbechers (2) passend mit einer Öffnung (15) versehen ist, welche auf der Außenseite der Bodenwand (11) mit einem Tauchrohr (16) verbunden ist, das Tauchrohr (16) eine Verlängerung (17) hat, welche sich in dem Dosierbehälter (2) befindet, die Verlängerung (17) derart ausgelegt ist, daß Fluid von dem Tauchrohr (16) in den Dosierbecher (2) über die Verlängerung (17) eintreten kann, wobei die Kappenanordnung (3) entweder mit einer nach unten weisenden Hülse (38) versehen oder ein teilig mit dieser ausgelegt ist, welche in Gleiteingriff mit der Verlängerung (17) ist, die nach unten weisende Hülse (38) mit einer Ausnehmung (41) versehen ist, welche einen Fluiddurchgang gestattet, die Ausnehmung (41) ein unteres Ende (43) und ein oberes Ende (42) hat, und wobei die Ausnehmung (41) längs der nach unten weisenden Hülse (38) ausgerichtet ist, um das untere Ende (43) mit dem oberen Ende (42) zu verbinden, dadurch gekennzeichnet, daß die Verlängerung (17) eine Seitenwand (18) umfaßt, welche mit einer oberen Fläche (29) versehen ist, welche einen Fluiddurchgang über die obere Fläche (29) gestattet, daß die obere Fläche (29) von einer unteren Stelle zu einer höherliegenden Stelle in dem Dosierbecher (2) sich nach oben erstreckt, die obere Fläche (29) der Verlängerung (17) und die Ausnehmung (41) der nach unten weisenden Hülse (38) in einer Winkel- und Schnittanordnung miteinander angeordnet sind, wenn die nach unten weisende Hülse (38) und die Verlängerung (17) gleitbeweglich in Eingriff sind und die nach unten weisende Hülse (38) zwischen Positionen für eine stufenlos veränderbare Wahl der Schnittpunkte der oberen Fläche (29) der Verlängerung (17) und der Ausnehmung (41) der nach unten weisenden Hülse (38) verdrehbar ist, um eine sich stufenlos verändernde Längserstreckung des oberen Teils der Ausnehmung (41) in dem Dosierbecher (2) freizulegen, um zu ermöglichen, daß Fluid von dem Tauchrohr (16) in den Dosierbecher (2) gelangen und jegliches überschüssige Fluid über den freigelegten oberen Teil der Ausnehmung (41) in das Tauchrohr (16) zurückkehren kann.

15. Dosismeßvorrichtung nach Anspruch 14, bei dem die obere Fläche (29) der Verlängerung (17) schraubenlinienförmig ausgebildet ist.

16. Dosismeßvorrichtung nach Anspruch 14, bei der der unterste Punkt der oberen Fläche (29) der Verlängerung (17) in der Nähe des Bodens des Dosierbechers (2) und der höchste Punkt der oberen Fläche (29) der Verlängerung (17) in der Nähe des oberen Teils des Dosierbechers (2) liegt.

17. Dosismeßvorrichtung nach Anspruch 14, bei der der Außendurchmesser der Verlängerung (17) im wesentlichen gleichgroß wie der Innendurchmesser der nach unten weisenden Hülse (38) ist.

18. Dosismeßvorrichtung nach Anspruch 14, bei der der Innendurchmesser der Verlängerung (17) im wesentlichen gleichgroß wie der Außendurchmesser der nach unten weisenden Hülse (38) ist.

## Revendications

1. Dispositif doseur (1) de fluides qui comprend une coupelle de dosage (2) équipée d'un assemblage formant bouchon (3), la paroi de fond (11) de la coupelle de dosage (2) étant munie d'un orifice (15) qui est connecté à la sortie de la paroi de fond (11) à un tube plongeur (16), le tube plongeur (16) ayant une extension (17) placée dans la coupelle de dosage (2), l'extension (17) étant construite pour permettre le passage du fluide depuis le tube plongeur (16) dans la coupelle de dosage (2) à travers l'extension (17), et l'assemblage formant bouchon (3) étant également équipé d'une gaine (38) se projetant vers le bas pour s'engager en coulissant sur l'extension (17), ladite gaîne (38) se projetant vers le bas étant munie d'une rainure (41) qui permet au fluide d'y passer, ladite rainure ayant une extrémité inférieure (43) et une extrémité supérieure (42) dans laquelle la rainure (41) est orientée le long de la gaîne (38) se projetant vers le bas pour relier l'extrémité inférieure (43) à l'extrémité supérieure (42) ; caractérisé en ce que l'extension (17) est munie d'une rainure (20) permettant au fluide d'y passer, ladite rainure (20) ayant une extrémité inférieure (21) et une extrémité supérieure (22) dans laquelle la rainure (20) est orientée le long de l'extension (17) pour connecter l'extrémité inférieure (21) à l'extrémité supérieure (22), la rainure (20) dans l'extension (17) et la rainure (41) dans la gaîne (38) se projetant vers le bas étant placées en arrangement angulaire et sécant l'un avec l'autre quand la gaîne (38) se projetant vers le bas et l'extension (17) sont engagées en coulissement et la gaîne (38) se projetant vers le bas peut tourner entre ces positions pour prendre une infinité de points d'intersection à sélection variable des deux rainures (20) et (41), pour réaliser un seul orifice (60) de hauteur variable en continu dans la coupelle de dosage (2), permettant le passage du fluide du tube plongeur (16) dans la coupelle de dosage (2) et le retour de tout excès de fluide par l'orifice (60) et dans ledit tube plongeur (16).

2. Dispositif doseur de la revendication 1 dans lequel l'une des rainure (20) ou (41) sur l'extension (17) ou sur la gaîne se projetant vers le bas (38) est de forme hélicoïdale et la rainure (41) ou (20) sur l'autre pièce, la gaîne (38) se projetant vers le bas ou l'extension (17), est de nature généralement longitudinale.

3. Dispositif doseur de la revendication 1 dans lequel les deux rainures (20) et (41) de l'extension (17) et de la gaîne se projetant vers le bas (38) sont de forme hélicoïdale et chaque rainure hélicoïdale (20) et (41) est de sens opposé à l'autre.

4. Dispositif doseur de la revendication 1, dans lequel les extrémités supérieures (22) et (42) des deux rainures (20) et (41) sont placées sensiblement à la même hauteur dans la coupelle de dosage (2) et que les extrémités inférieures (21) et (43) des deux rainures (20) et (41) sont aussi placées sensiblement à la même hauteur dans la coupelle de dosage (2).

5. Dispositif doseur de la revendication 4 dans lequel les extrémités inférieures (21) et (43) des rainures (20) et (41) sont situées près du fond de la coupelle de dosage (2) et les extrémités supérieures (22) et (42) des rainures (20) et (41) sont situées près du sommet de la coupelle de dosage (2).

6. Dispositif doseur de la revendication 1 qui est fixé à un récipient de fluide (4) avec des parois latérales souples pour permettre au fluide de monter dans le tube plongeur (16) par suite de l'augmentation de pression sur le fluide dans le récipient (4) par suite de la compression de la paroi latérale souple.

7. Dispositif doseur de la revendication 1, dans lequel la gaîne (38) se projetant vers le bas est partie intégrante du bouchon (3) de la coupelle de dosage (2).

8. Dispositif doseur de la revendication 7, dans lequel le bouchon (3) contient aussi un ajutage (36) pour prélever les contenus de la coupelle de dosage (2).

9. Dispositif doseur de la revendication 8, dans lequel le bouchon (3) contient aussi un évent (37) pour faciliter le prélèvement des contenus de la coupelle de dosage (2).

10. Dispositif doseur de la revendication 7, dans lequel le bouchon (3) comprend un indicateur (34) de dosage et la coupelle de dosage (2) comprend une échelle pour présélectionner la dose à distribuer.

11. Dispositif doseur de la revendication 1, dans lequel le diamètre externe de l'extension (17) est sensiblement le même que le diamètre interne de la gaîne (38) se projetant vers le bas.

12. Dispositif doseur de la revendication 1, dans lequel le diamètre interne de l'extension (17) est sensiblement le même que le diamètre externe de la gaîne (38) se projetant vers le bas.

13. Dispositif doseur de la revendication 1, dans lequel l'une des rainures (20) ou (41) s'étend le long de l'extension (17) ou de la gaîne (38) se projetant vers le bas au delà de l'extension de l'autre rainure (41) ou (20) pour fournir une position qui ne forme pas d'orifice (60).

14. Dispositif doseur (1) de fluides qui comprend une coupelle de dosage (2) équipée d'un assemblage formant bouchon (3), la paroi de fond (11) de la coupelle de dosage (2) étant munie d'un orifice (15) qui est connecté à la sortie de la paroi de fond (11) à un tube plongeur (16), le tube plongeur (16) ayant une extension (17) placée dans la coupelle de dosage (2), l'extension (17) étant construite pour permettre le passage du fluide du tube plongeur (16) dans la coupelle de dosage (2) par l'extension (17), et l'assemblage de coupelle (3) étant soit équipé d'une gaîne intégrée (38) se projetant vers le bas en engagement coulissant avec l'extension (17), ladite gaîne (38) se projetant vers le bas étant munie d'une rainure (41) qui permet au fluide d'y passer, ladite rainure ayant une extrémité inférieure (43) et une extrémité supérieure (42) dans laquelle la rainure (41) est orientée le long de la gaîne (38) se projetant vers le bas (38) pour relier l'extrémité inférieure (43) à l'extrémité supérieure (42); caractérisé en ce que l'extension (17) comprend une paroi latérale (18) munie d'une surface supérieure (29) qui permet au fluide de dépasser ladite surface supérieure (29) quand ladite surface supérieure (29) s'étend d'un point inférieur à un point supérieur dans la coupelle de dosage (2), la surface supérieure (29) de l'extension (17) et la rainure (41) dans la gaîne (38) se projetant vers le bas étant placés mutuellement en position angulaire avec intersection quand la gaîne (38) se erojetant vers le bas et l'extension (17) sont engagées en coulissement et la gaîne (38) se projetant vers le bas peut tourner entre des positions extrêmes pour prendre une infinité de points d'intersection choisis à volonté de la surface supérieure (29) de l'extension (17) et de la rainure (41) de la gaîne (38) se projetant vers le bas pour exposer une longueur variable en continu de la portion supérieure de la rainure (41) dans la coupelle de dosage (2) ce qui permet au fluide de passer du tube plongeur (16) dans la coupelle de dosage (2) et de recycler tout fluide en excès via la position supérieure exposée de la rainure (41) dans ledit tube plongeur (16).

15. Dispositif doseur de la revendication 14 dans lequel la surface supérieure (29) de l'extension (17) est de forme hélicoïdale.

16. Dispositif doseur de la revendication 14 dans lequel le point le plus bas de la surface supérieure (29) de l'extension (17) est placé près du fond de la coupelle de dosage (2) et le point le plus élevé de la surface supérieure (29) de l'extension (17) est placé près du sommet de la coupelle de dosage (2).

17. Dispositif doseur de la revendication 14 dans lequel le diamètre externe de l'extension (17) est sensiblement le même que le diamètre interne de la gaîne se projetant vers le bas (38).

18. Dispositif de la revendication 14, dans lequel le diamètre interne de l'extension (17) est sensiblement le même que le diamètre externe de la gaîne se projetant vers le bas (38).

FIG. 1

FIG. 2

FIG. 3

FIG. 4

13

FIG. 5

FIG. 6